# EUROPÄISCHE PATENTSCHRIFT

(11) **EP 2 278 138 B1**
(45) Veröffentlichungstag und Bekanntmachung des Hinweises auf die Patenterteilung: **16.04.2014**
(21) Anmeldenummer: 10004900.6
(22) Anmeldetag: 10.05.2010
(51) Int. Cl.: F02B 29/04, F02B 31/08, F02M 35/10

(54) **Brennkraftmaschine und Verfahren zum Betreiben dieser**
Combustion engine and method for operating a combustion engine
Moteur à combustion interne et son procédé de fonctionnement

(30) Priorität: 19.06.2009 DE 102009025492
(43) Veröffentlichungstag der Anmeldung: 26.01.2011
(73) Patentinhaber: Volkswagen Aktiengesellschaft, 38440 Wolfsburg (DE)
(72) Erfinder: Wildhagen, Frank, 31275 Lehrte (DE); Heimermann, Christian, 38442 Wolfsburg (DE)

(56) Entgegenhaltungen:
- WO-A1-02/40853
- GB-A- 2 298 896
- JP-A- 11 324 686
- JP-A- 2001 248 448

## Beschreibung

Die Erfindung betrifft eine Brennkraftmaschine, insbesondere für ein Kraftfahrzeug, mit einem Zylinderkopf, wenigstens einem Arbeitszylinder, wenigstens einem in dem Zylinderkopf ausgebildeten Einlasskanal für jeweils einen Arbeitszylinder und einem Saugrohr für Verbrennungsluft, welches mit allen Einlasskanälen aller Arbeitszylinder verbunden ist, gemäß dem Oberbegriff des Patentanspruchs 1. Die Erfindung betrifft ferner Verfahren zum Betreiben einer derartigen Brennkraftmaschine, gemäß dem Oberbegriff des Patentanspruchs 12.

Restgas wird heute bereits bei Serienmotoren zur innermotorischen Reduktion von Stickoxiden verwendet. Unterschieden wird dabei zwischen externer Hochdruck- und Niederdruck-Abgasrückführung. Nachteilig bei beiden Abgasrückführungsstrategien ist, dass sie im dynamischen Betrieb nicht schnell genug zu- bzw. abgeschaltet werden können und damit insbesondere bei großen Lastsprüngen hohe NOₓ-Spitzen auftreten. Mit einem variablen Ventiltrieb, der die Möglichkeit bietet, während der Auslassphase das Einlassventil zu öffnen oder alternativ das Einlassventil vor oder nach dem Auslassventil zu öffnen sowie die Auslassventilsteuerzeiten anzupassen und damit Restgas in das Saugrohr zurückzuschieben, kann ebenfalls Restgas mittels einer so genannten inneren AGR zurückgeführt werden, indem es beim nächsten Ansaugvorgang mit der Frischluft und evtl. externer AGR in den Brennraum gesaugt wird. Nachteilig bei diesem Verfahren ist die hohe Temperatur des im Saugrohr vorgelagerten Restgases, die das Potential der NOₓ-Minderung reduziert und die Partikelkonzentration erhöht.

Aus der JP 2112653 ist eine Kühlanordnung für einen Zylinderkopf bekannt, wobei in einem Einlasskanal ein den Einlasskanal ringförmig umgebender Kühlflüssigkeitskanal ausgebildet ist.

Auch die JP 2001248448 A und die JP 11324886 A offenbaren jeweils die Anordnung einer Kühlvorrichtung in den Einlasskanälen oder dem Saugrohr eines mehrzylindrigen Verbrennungsmotors.

Aus der DE 10 2004 025 185 A1 ist ein Luftansaugsystem für eine Verbrennungskraftmaschine mit einem Sammeleinlasskanal bekannt. In dem Sammeleinlasskanal ist eine Kühlvorrichtung integriert.

Und aus der GB 2 298 896 A ist bekannt, dass es durch eine Überschneidung von Öffnungszeiten der Ein- und Auslassventile eines Verbrennungsmotors zu einer internen Abgasrückführung kommen kann.

Der Erfindung liegt die Aufgabe zugrunde, eine Brennkraftmaschine und ein Verfahren der o.g. Art hinsichtlich der Schadstoffemissionen im dynamischen Betrieb mit schnellem Wechsel des Betriebszustandes der Brennkraftmaschine zu verbessern.

Diese Aufgabe wird erfindungsgemäß durch eine Brennkraftmaschine der o.g. Art mit den in Anspruch 1 gekennzeichneten Merkmalen und durch ein Verfahren der o.g. Art mit den in Anspruch 10 gekennzeichneten Merkmalen gelöst. Vorteilhafte Ausgestaltungen der Erfindung sind in den weiteren Ansprüchen beschrieben.

Dazu ist es bei einer Brennkraftmaschine der o.g. Art erfindungsgemäß vorgesehen, dass zwischen dem Saugrohr und dem Zylinderkopf ein Kühler derart angeordnet und ausgebildet ist, dass die aus dem Saugrohr strömende Luft durch den Kühler in wenigstens einen Einlasskanal strömt.

Dies hat den Vorteil, dass für eine interne Abgasrückführung das rückgeführte Abgas gekühlt wird, während es im Ansaugtrakt bis zum Ansaugtakt vorgelagert ist. Dies erzielt einen reduzierten Schadstoffausstoß für die interne Abgasrückführung, welche jedoch gleichzeitig eine geringe Trägheit bei dynamischen Änderungen des Betriebszustandes der Brennkraftmaschine besitzt und zusätzlich zylinderindividuell und zyklusindividuell steuerbar ist.

Eine besonders gute Füllung der Arbeitszylinder mit Verbrennungsluft und eine Erzeugung einer entsprechenden Ladungsbewegung im Arbeitszylinder erzielt man dadurch, dass für jeden Arbeitszylinder wenigstens zwei Einlasskanäle im Zylinderkopf ausgebildet sind, wobei jeweils für jeden Arbeitszylinder ein erster Einlasskanal als Füllungskanal, insbesondere Tangentialkanal, und ein zweiter Einlasskanal als Drallkanal, insbesondere Spiralkanal, ausgebildet ist.

Eine zusätzliche Führung von Restgas aus den Arbeitszylindern heraus und wieder in diese hinein mit hoher Kühlleistung für das Restgas erzielt man dadurch, dass in dem Kühler eine Trennwand derart angeordnet und ausgebildet ist, dass diese Trennwand den Kühler in ein erstes Volumen und ein zweites Volumen unterteilt, wobei das Saugrohr mit beiden Volumina fluidleitend verbunden ist und das erste Volumen nur mit den Spiralkanälen aller Arbeitszylinder und das zweite Volumen nur mit den Tangentialkanälen aller Arbeitszylinder fluidleitend verbunden ist.

Zum Erzielen einer hohen Kühlleistung weist der Kühler wenigstens einen Kühlmediumkanal zum Durchströmen eines Kühlmediums auf. Dieses Kühlmedium ist beispielsweise Wasser, Gas oder Öl.

Einen einfachen Aufbau und Betrieb ohne zusätzliche Bauteile, wie Pumpen, erzielt man dadurch, dass der Kühlmediumkanal mit einem Kühlsystem des Zylinderkopfes verbunden ist. Eine hohe Kühlleistung unabhängig von dem Kühlsystem des Zylinderkopfes erzielt man dadurch, dass der Kühlmediumkanal von dem Kühlsystem des Zylinderkopfes getrennt ist.

Eine weitere Verbesserung der Kühlleistung erzielt man dadurch, dass der Kühler eine Erweiterung aufweist, die sich bis in wenigstens einen Einlasskanal erstreckt.

Einen Doppelnutzen der Bauteile des Kühlers erzielt man dadurch, dass die Erweiterung Kühlzungen umfasst, die als Leitbleche zum Erzeugen einer gezielten Ladungsbewegung ausgebildet sind.

Eine zusätzliche Absenkung der Temperatur des Zylinderkopfes insgesamt und im Bereich der Einlasskanäle erzielt man dadurch, dass die Erweiterung Kühlrippen umfasst, die beispielsweise einstückig mit dem Zylinderkopf ausgebildet sind und optional mit einem Kühlsystem des Zylinderkopfes verbunden sind.

Bei einem Verfahren der o.g. Art ist es erfindungsgemäß vorgesehen, dass in einem Ausschubtakt eines Arbeitszylinders der Brennkraftmaschine eine für eine interne Abgasrückführung dieses Arbeitszylinders verwendete Restgasmasse nur durch den Füllungskanal, insbesondere Tangentialkanal, aus diesem Arbeitszylinder über den Kühler in das Saugrohr ausgeschoben wird.

Dies hat den Vorteil, dass für eine interne Abgasrückführung das rückgeführte Abgas gekühlt wird, während es im Ansaugtrakt bis zum Ansaugtakt vorgelagert ist. Dies erzielt einen reduzierten Schadstoffausstoß für die interne Abgasrückführung, welche jedoch gleichzeitig eine geringe Trägheit bei dynamischen Änderungen des Betriebszustandes der Brennkraftmaschine besitzt und zusätzlich zylinderindividuell und zyklusindividuell steuerbar ist.

Ein besonders gutes Ergebnis hinsichtlich eines Russ-NOₓ-Trade-Offs mit besonders effektiver Kühlung erzielt man dadurch, dass in einem anschließenden Ansaugtakt dieses Arbeitszylinders der Brennkraftmaschine Verbrennungsluft und wenigstens ein Teil der zuvor ausgeschobenen Restgasmenge nur durch den Drallkanal, insbesondere Spiralkanal, in diesen Arbeitszylinder eingeleitet wird.

Eine besonders gute Füllung des Zylinders bei gleichzeitig guter Ausnutzung des Kühlers erzielt man dadurch, dass in dem Ansaugtakt Verbrennungsluft und wenigstens ein Teil der zuvor ausgeschobenen Restgasmenge zusätzlich durch den Füllungskanal, insbesondere Tangentialkanal, in diesen Arbeitszylinder eingeleitet wird.

Eine besonders einfache Ausführungsform ohne die Notwendigkeit einer getrennten Ansteuerung von Einlassventilen der Einlasskanäle erzielt man dadurch, dass in dem Ausschubtakt die Restgasmasse zusätzlich durch den Spiralkanal aus dem Arbeitszylinder über den Kühler in das Saugrohr ausgeschoben wird.

Die Erfindung wird im Folgenden anhand der Zeichnung näher erläutert. Diese zeigt in
- Fig. 1: eine grafische Darstellung eines Russ-NOₓ-Trade-Offs für ausgewählte Betriebsverfahren,
- Fig. 2: eine Ausführungsform einer Brennkraftmaschine, welche gemäß einem ersten Verfahren betrieben wird,
- Fig. 3: die Ausführungsform einer Brennkraftmaschine gemäß Fig. 2, welche gemäß einem zweiten, erfindungsgemäßen Verfahren betrieben wird,
- Fig. 4: die Ausführungsform einer Brennkraftmaschine gemäß Fig. 2, welche gemäß einem dritten, erfindungsgemäßen Verfahren betrieben wird,
- Fig. 5: eine beispielhafte Weiterbildung einer erfindungsgemäßen Brennkraftmaschine gemäß einer zweiten vorteilhaften Ausführungsform,
- Fig. 6: eine beispielhafte Weiterbildung einer erfindungsgemäßen Brennkraftmaschine gemäß einer dritten vorteilhaften Ausführungsform,
- Fig. 7: eine beispielhafte Weiterbildung einer erfindungsgemäßen Brennkraftmaschine gemäß einer vierten vorteilhaften Ausführungsform und
- Fig. 8: eine beispielhafte Weiterbildung einer erfindungsgemäßen Brennkraftmaschine gemäß einer fünften vorteilhaften Ausführungsform.

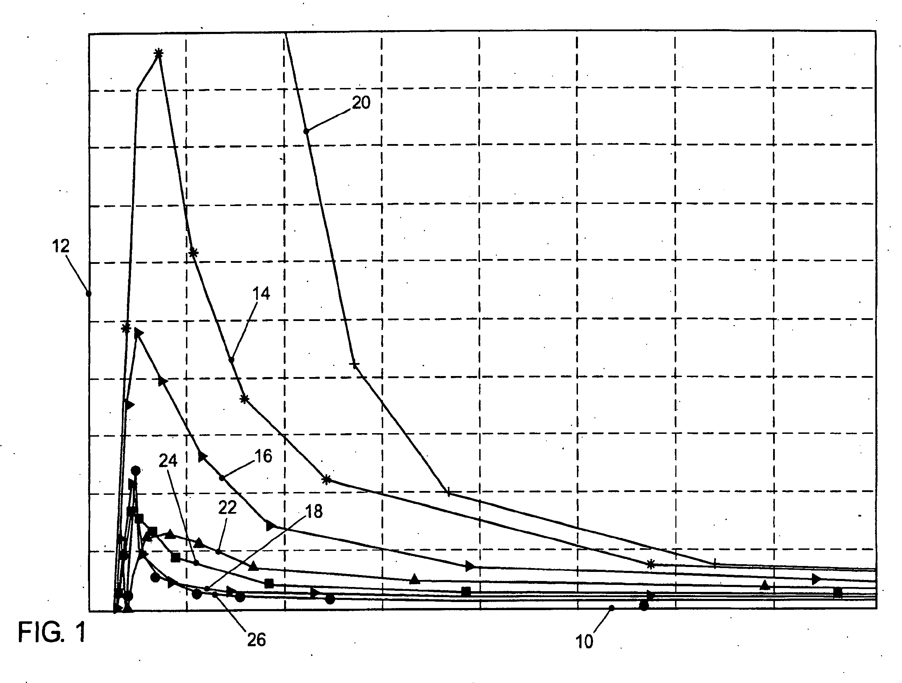

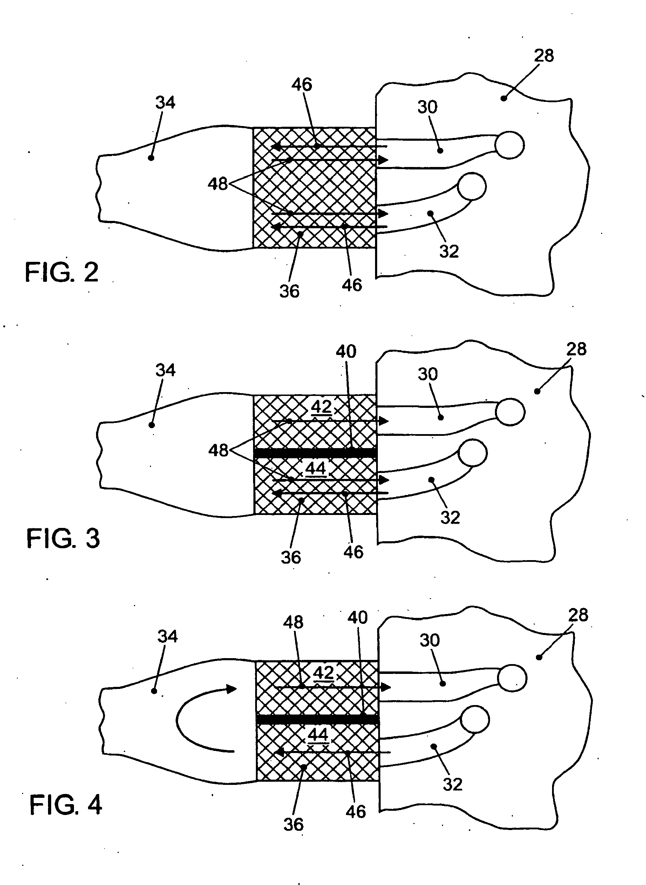

In Fig. 1 ist auf einer horizontalen Achse 10 ein NOₓ-Durchsatz in [g/h] und auf einer vertikalen Achse 12 ein Partikelmassenstrom in [g/h] aufgetragen. Mehrere Graphen veranschaulichen einen Russ-NOₓ-Trade-Off für ausgewählte Betriebsverfahren. Ein erster Graph 14 zeigt einen Russ-NOₓ-Trade-Off für ein erstes Betriebsverfahren mit 100% interner Abgasrückführung (AGR), interner Kühlung sowie Vorlagern und Ansaugen von Restgas (Abgas) über beide Einlasskanäle, welches nachfolgend anhand Fig. 2 näher beschrieben wird. Ein zweiter Graph 16 zeigt einen Russ-NOₓ-Trade-Off für ein zweites, erfindungsgemäßes Betriebsverfahren mit 100% interner Abgasrückführung (AGR), interner Kühlung sowie Vorlagern von Restgas über Tangentialkanal und Ansaugen von Restgas über beide Einlasskanäle, welches nachfolgend anhand Fig. 3 näher beschrieben wird. Ein dritter Graph 18 zeigt einen Russ-NOₓ-Trade-Off für ein drittes, erfindungsgemäßes Betriebsverfahren mit 100% interner Abgasrückführung (AGR), interner Kühlung sowie Vorlagern von Restgas über einen Tangentialkanal und Ansaugen von Restgas über einen Spiralkanal, welches nachfolgend anhand Fig. 4 näher beschrieben wird.

Ein vierter Graph 20 veranschaulicht zum Vergleich einen Russ-NOₓ-Trade-Off mit 100% interner Abgasrückführung (AGR) jedoch ohne interne Kühlung mit Vorlagern und Ansaugen von Restgas über beide Einlasskanäle. Ein fünfter Graph 22 veranschaulicht zum Vergleich einen Russ-NOₓ-Trade-Off mit 100% externer AGR mit interner Kühlung und Ansaugen über beide Einlasskanäle. Ein sechster Graph 24 veranschaulicht zum Vergleich einen Russ-NOₓ-Trade-Off mit 100% externer AGR ohne interne Kühlung und Ansaugen über beide Einlasskanäle. Ein siebter Graph 26 veranschaulicht zum Vergleich einen Russ-NOₓ-Trade-Off mit 100% externer AGR mit interne Kühlung und Ansaugen nur über Spiralkanal.

Aus der Fig. 1 ist unmittelbar ersichtlich, dass die externe AGR grundsätzlich eine bessere Reduktion von Schadstoffemissionen erzielt. Allerdings kann diese Art der AGR im dynamischen Betrieb der Brennkraftmaschine nicht schnell genug zu- bzw. abgeschaltet werden, so dass insbesondere bei großen Lastsprüngen hohe NOₓ Spitzen auftreten. Dies ist durch eine mehr oder weniger lange Totzeit durch große Leitungslängen/lLeitungsvolumina der AGR-Strecken bedingt. Andererseits ist sofort ersichtlich, dass mit dem dritten, erfindungsgemäßen Betriebsverfahren gemäß Graph 18 die Reduktion von Schadstoffemissionen wie bei externer AGR erzielt werden kann, wobei dieses Verfahren gleichzeitig sehr schnell an plötzliche Änderungen des Betriebszustandes der Brennkraftmaschine, wie beispielsweise plötzliche Lastwechsel, anpassbar ist.

Mit dem Begriff "Russ-NOₓ-Trade-Off" ist hierin eine Optimierung zwischen den gegenläufigen Parametern "NOₓ-Durchsatz" und "Partikelmassenstrom" bezeichnet. Beide Parameter sollen minimiert werden, jedoch erhöht sich der Partikelmassenstrom, wenn man den NOₓ-Durchsatz verringert und umgekehrt, wie aus Fig. 1 ersichtlich. Mit anderen Worten liegt ein Zielkonflikt vor. Daher handelt es sich um gegenläufige Parameter, wobei für diesen Zielkonflikt eine Optimierung bzw. ein Kompromiss oder ein Ausgleich gefunden werden muss.

Die in den Fig. 2 bis 4 dargestellte, Ausführungsform einer Brennkraftmaschine umfasst einen Zylinderkopf 28 in dem für jeden Arbeitszylinder der Brennkraftmaschine (nicht dargestellt) zwei Einlasskanäle 30, 32 ausgebildet sind, wobei jeweils ein Einlasskanal als Drallkanal 30, insbesondere als Spiralkanal, und der jeweils entsprechend andere Einlasskanal als Füllungskanal 32, insbesondere Tangentialkanal, ausgebildet ist. Der Ausdruck "Drallkanal" bezeichnet hierbei einen Einlasskanal, welcher derart ausgebildet ist, dass dieser eine Drallbewegung der in einen Brennraum einströmenden Verbrennungsluft, also eine Ladungsbewegung, erzeugt. Der Ausdruck "Füllungskanal" bezeichnet hierbei einen Einlasskanal, welcher derart ausgebildet ist, dass dieser im Wesentlichen die Füllung des Brennraumes mit Verbrennungsluft ermöglicht, also einen hohen Volumenstrom der Ladung. Ein Saugrohr 34 ist mit allen Einlasskanälen 30, 32 aller Arbeitszylinder fluidleitend verbunden. Über das Saugrohr 34 wird den Arbeitszylindern Verbrennungsluft und ggf. extern zurückgeführtes Abgas über die Einlasskanäle 30, 32 zugeführt.

Zwischen dem Zylinderkopf 28 und dem Saugrohr 34 ist ein zusätzlicher Kühler 36 derart angeordnet und ausgebildet, dass die aus dem Saugrohr 34 in die Einlasskanäle 30, 32 strömende Verbrennungsluft sowie ggf. zurückgeführtes Abgas durch den Kühler 36 strömen.

Der Kühler 36 dient auch zum Kühlen von Abgas bzw. Restgas, welches über eine interne Abgasrückführung zurückgeführt wird, hierbei wird in einem Ausstoßtakt eines Arbeitszylinders ein Teil des Restgases anstatt über einen Auslasskanal (nicht dargestellt) in eine Abgasanlage (nicht dargestellt) über wenigstens einen Einlasskanal 30, 32 in das Saugrohr 34 geschoben und dort für den nächsten Saughub bzw. Ansaugtakt dieses Arbeitszylinder vorgelagert. Im nächsten Saughub bzw. Ansaugtakt dieses Arbeitszylinders strömt dann Verbrennungsluft zusammen mit diesem im Saugrohr 34 vorgelagerten Restgas in den Arbeitszylinder ein, so dass dieses Restgas erneut einer Verbrennung zugeführt wird. Durch den direkt zwischen Saugrohr 34 und Einlasskanälen 30, 32 vorgesehenen Kühler, der so nahe wie möglich an Einlassventilen (nicht dargestellt) der Einlassventile 30, 32 angeordnet ist, wird das intern zurückgeführte Restgas während des Vorlagerns gekühlt.

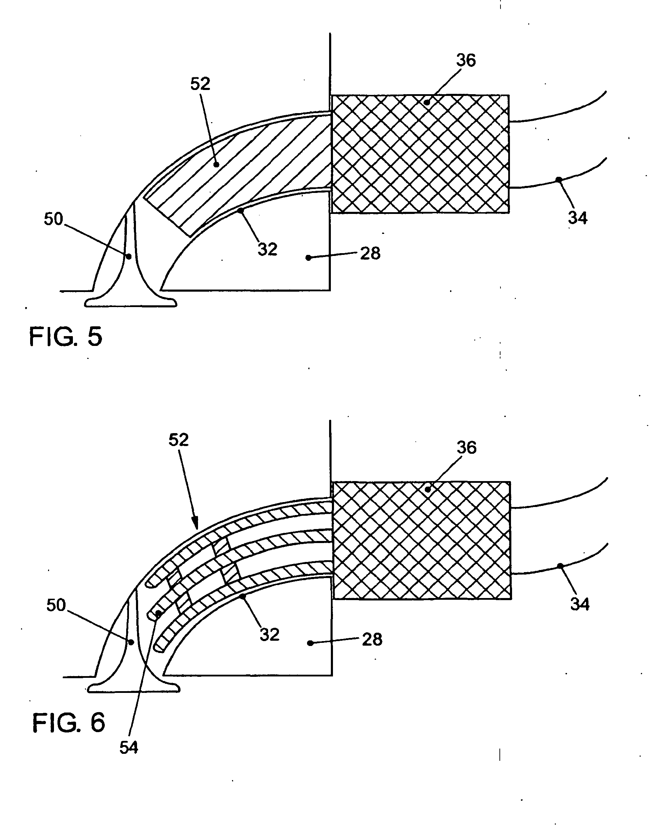

Der Ladungskühler 36 wird vorzugsweise bei voll- oder teilvariabler Einlassventilsteuerung eingesetzt. Der Kühler 36 befindet sich so nah wie möglich an den Einlassventilen, um auch geringe Mengen vorgelagerten Restgases zu kühlen. Der Kühler 36 erstreckt sich optional bis in die Einlasskanäle, wie nachfolgend unter Bezugnahme auf die Fig. 5 bis 8 näher erläutert wird, und/oder bis in das Saugrohr. Der Kühler 36 ist in Richtung Einlassventile geneigt, um Kondensat in den Brennraum abzuführen. Der Kühler 36 ist vorzugsweise wassergekühlt, entweder von einem separaten Kühlkreislauf oder direkt vom Kühlwasser des Zylinderkopfes 28. Optional ist ein separater Kühlkreislauf jeweils für Zylinderkopf 28 und Ladungskühler 36 vorgesehen, womit die Zylinderkopftemperatur gesenkt wird. Gegebenenfalls ist ein Temperaturniveau des Kühlers 36 derart vorbestimmt, dass eine Kondensatbildung vermieden ist. Der Ladungskühler 36 zeichnet sich durch eine hohe Kühlleistung bei geringem Druckverlust aus. Der Kühler 36 übernimmt optional bei entsprechender Auslegung die Funktion eines Ladeluftkühlers. Optional sind am Kühler 36 Kühlelemente in Lamellenform vorgesehen, welche sich insbesondere bis in die Einlasskanäle 30, 32 erstrecken und beispielsweise als Leitbleche derart ausgebildet sind, dass diese Kühlelemente eine gezielte Ladungsbewegung erzeugen.

Der Zylinderkopf 28 ist vorzugsweise mit zwei Einlassventilen (in Fig. 2 bis 4 nicht dargestellt) und den beiden getrennten Einlasskanälen 30, 32 ausgestattet In den Fig. 3 und 4 ist eine zusätzliche Trennwand 40 im Kühler 36 dargestellt, welche derart angeordnet und ausgebildet ist, dass diese Trennwand 40 den Kühler 36 in ein erstes Volumen 42 und ein zweites Volumen 44 unterteilt, wobei das Saugrohr 34 mit beiden Volumina 42, 44 fluidleitend verbunden ist und das erste Volumen 42 nur mit den Spiralkanälen 30 aller Arbeitszylinder und das zweite Volumen 44 nur mit den Tangentialkanälen 32 aller Arbeitszylinder fluidleitend verbunden ist. Je größer der Abstand zwischen den Einlassventilen und dem integrierten Kühler 36 gewählt wird, desto vorteilhafter wird der Betrieb des Kühlers 36 mit den nachfolgend näher beschriebenen zweiten und dritten Betriebsverfahren. Bei Verwendung des zweiten, bzw. dritten, erfindungsgemäßen Betriebsverfahrens ist es vorteilhaft, den Kühler 36 für beide Einlasskanäle 30, 32 zu trennen, wie in Fig. 3 und 4 dargestellt und zuvor beschrieben, so dass ein Überströmen von einem Einlasskanal 32 in den anderen Einlasskanal 30 zwischen Kühler 36 und Einlasskanal 30, 32 und im Kühler 36 selbst nicht möglich ist. Die besten Ergebnisse im Russ-NOₓ-Trade-Off ergibt das dritte, erfindungsgemäße Betriebsverfahren.

Zum zylinderindividuellen und zyklussynchronen Vorlagern von internem Restgas (interne AGR) und somit zur gezielten Reduktion von Stickoxiden werden erfindungsgemäß verschiedene Betriebsverfahren vorgeschlagen. Nachfolgend werden drei Betriebsverfahren zum Betreiben der zuvor beschriebenen Brennkraftmaschine unter Bezugnahme auf die Fig. 2 bis 4 näher erläutert.

Fig. 1 zeigt mit den Graphen 14, 16 und 18 die an einem Prüfstand gemessenen Ergebnisse für die nachfolgenden drei ausgewählten Betriebsverfahren: Als Vergleich sind in Fig. 1 noch andere Ergebnisse interner AGR-Strategien ohne integrierten Kühler, sowie Ergebnisse bei Verwendung externer AGR mit und ohne Kühler dargestellt (Graphen 20, 22. 24 und 26). Referenzdaten liefert eine λ-Variation über externe AGR. Die in Fig. 1 dargestellten Ergebnisse der externen AGR-Variation mit und ohne integriertem Kühler 36 wurden mit einer Frischgastemperatur von 40°C gemessen. Die sehr niedrigen Emissionen bei Verwendung externer AGR können ohne integrierten Ladungskühler 36 nicht erreicht werden, wenn ungekühlte interne AGR zur Reduzierung der Stickoxide genutzt wird, wie aus Fig. 1 ersichtlich.

Mit dem integrierten Ladungskühler 36 lassen sich die Stickoxid-Emissionen deutlich reduzieren. In dem ersten Betriebsverfahren wird, wie in Fig. 2 dargestellt, die gesamte interne Restgasmasse durch ein Öffnen beider Einlassventile beider Einlasskanäle 30, 32 während der Ausschubphase durch den Kühler 36 ausgeschoben, wie in Fig. 2 mit Pfeilen 46 angedeutet, im Saugrohr 34 vorgelagert und anschließend wieder über beide Einlassventile beider Einlasskanäle 30, 32 angesaugt, wie in Fig. 2 mit Pfeilen 48 angedeutet. Die durch den Kühler 36 erbrachte Kühlleistung ist insbesondere bei kleinen Restgasmengen begrenzt. Für sehr geringe Mengen Restgas ist dieses erste Betriebsverfahren weniger geeignet, da.ggf. der Kühler 36 von der Restgasmenge des internen AGR nicht erreicht wird, wenn diese beim Ausschub nur die Einlasskanäle 30, 32 füllt. Dies kann jedoch verbessert werden, wenn zusätzliche "Kühlzungen" vorgesehen sind, die sich in die Einlasskanäle hinein bis kurz vor die Einlassventile erstrecken. Ein besonderer Vorteil des ersten Betriebsverfahrens liegt darin, dass beide Einlassventile 30, 32 sowohl für das Vorlagern der Restgase als auch für die anschließende Ansaugphase gleichzeitig betätigt werden. Bei Verwendung einer variablen Ventilsteuerung ist somit ein einziger Aktuator für beide Einlassventile 30, 32 ausreichend, wenn die Ventile mechanisch gekoppelt werden.

Nachfolgend wird ein zweites, erfindungsgemäßes Betriebsverfahren unter Bezugnahme auf Fig. 3 beschrieben Für das zweite erfindungsgemäße Betriebsverfahren ist eine getrennte Ansteuerung der Einlassventile 30, 32 notwendig. Dieses zweite erfindungsgemäße Verfahren erzielt eine bessere Ausnutzung des integrierten Kühlers bzw. verringert das effektiv für die Kühlung der internen AGR nicht zur Verfügung stehende Volumen. Hierzu wird das heiße Restgas nur über den Tangentialkanal 32 (Füllungskanal, bzw. der Einlasskanal mit dem größeren Querschnitt zur Vermeidung unnötiger Ladungswechselverluste) ausgeschoben, wie in Fig. 3 mit Pfeil 46 angedeutet, im Saugrohr 34 vorgelagert und anschließend über beide Einlassventile 30, 32 angesaugt, wie in Fig. 3 mit Pfeilen 48 angedeutet. Im Vergleich zum ersten Betriebsverfahren wird mit dem zweiten, erfindungsgemäßen Betriebsverfahren bei gleicher Restgasmasse ein größerer Anteil der Restgasmenge gekühlt, da annähernd die gesamte Restgasmasse den tangentialseitigen Teil 44 des Kühlers 36 durchströmen muss. Ein zudem höherer Anteil an interner AGR wird im Saugrohr zwischengelagert und passiert den Kühler 36 in der folgenden Ansaugphase ein zweitens Mal. Lediglich derjenige Teil der internen AGR, der während des Vorlagerns im Tangentialkanal 32 verbleibt, bleibt ungekühlt. Das Potential der mit diesem Verfahren gekühlten Restgase zeigt Graph 16 in Fig. 1. Bei gleichen Partikelemissionen können die Stickoxide im Vergleich zum ersten Betriebsverfahren annähernd halbiert werden Vorteilhaft für dieses zweite, erfindungsgemäße Betriebsverfahren ist es, wenn der Kühler 36 so konstruiert/verbaut ist, dass die heißen Restgase beim Vorlagern nicht aus dem tangentialseitigen Teil 44 des Kühlers 36 in den spiralseitigen Teil 42 des Kühlers 36 gelangen können und umgekehrt. Hierzu ist die zuvor erläuterte Wandung 40 vorgesehen.

Nachfolgend wird unter Bezugnahme auf Fig. 4 ein drittes, erfindungsgemäßes Betriebsverfahren beschrieben. Das dritte, erfindungsgemäße Betriebsverfahren erzielt das beste Ergebnis im Russ-NOx-Trade-Off aller vorgestellten, erfindungsgemäßen Betriebsverfahren. Die Vorteile ergeben sich aus der effektivsten Kühlung der vorgelagerten Restgase in Verbindung mit einer erhöhten Drallbewegung des Frischgasgemisches zum Einspritz- bzw. Zündzeitpunkt. Die interne AGR wird auch bei diesem Verfahren nur über den Tangentialkanal 32 in das Saugrohr 34 ausgeschoben, wie in Fig. 4 mit Pfeil 46 angedeutet. Es ist daher auch bei dem dritten, erfindungsgemäßen Verfahren von Vorteil, wenn der integrierte Kühler 36 so ausgelegt ist, dass die Restgase beim Vorlagern nicht vom tangentialseitigen Teil 44 in den spiralseitigen Teil 42 des Kühlers 36 geschoben werden können. Daher ist auch in Fig. 4 die Trennwand 40 vorgesehen. Der Vorteil dieser Art der Vorlagerung wurde bereits oben in Bezug auf das zweite, erfindungsgemäße Betriebsverfahren beschrieben. Im Gegensatz zum zweiten erfindungsgemäßen Betriebsverfahren wird jedoch sowohl die vorgelagerte interne AGR als auch die Verbrennungsluft (bzw. das Gemisch aus Verbrennungsluft und externer AGR) in der folgenden Einlassphase nur über den Spiralkanal 30 angesaugt, wie in Fig. 4 mit Pfeil48 angedeutet.

Diese Vorgehensweise hat zwei grundsätzliche Vorteile. Zunächst wird durch das Ansaugen über den Spiralkanal 32 (Drallkanal) der Drall der Ladungsmasse erhöht, was zu einer verbesserten Gemischaufbereitung und damit zu geringeren Russemissionen führt. Aber auch die Kühlung der Internen AGR erfolgt sehr effektiv. Im Gegensatz zum zweiten, erfindungsgemäßen Betriebsverfahren wird die über den Tangentialkanal 32 vorgelagerte interne AGR, die den Kühler 36 nicht erreicht und im Tangentialkanal 32 verbleibt, nicht in der folgenden Einlassphase wieder ungekühlt angesaugt, sondern verbleibt während des Ansaugvorganges als AGR-"Pfropfen" im Tangentialkanal 32 und dem tangentialseitigen Teil 44 des Kühlers 36. Die interne AGR verbleibt dort also vom Zeitpunkt der Vorlagerung (in der Regel Mitte bis Ende des Ausschiebevorganges) bis zum nächsten Ausschiebevorgang, während dessen der AGR-"Pfropfen" des vorherigen Zyklus in das Saugrohr 34 geschoben und anschließend angesaugt wird. Die Kühlungsphase dieses "Pfropfens" beträgt also in etwa 700°KW und damit annähernd ein Arbeitsspiel. In dem ersten bzw. zweiten, erfindungsgemäßen Betriebsverfahren beträgt die Zeit zum Abkühlen etwa 30 ... 180 °KW. Der AGR-"Pfropfen" erfährt beim Ansaugen erneut eine Kühlung, da er durch den spiralkanalseitigen Teil 42 des Kühlers 36 geführt wird. Diese effiziente Kühlung reiner interner AGR in Verbindung mit dem hohen Drall führt zu einem Russ-NOₓ-Trade-Off, das mit dem einer externen gekühlten AGR vergleichbar ist. In Fig. 1 werden die besten Ergebnisse bei einem Betrieb mit rein externer AGR (Frischgastemperatur 40 °C, Ansaugen nur über Spiralkanal 30; Graph 26 in Fig. 1) und einem Betrieb mit rein interner AGR gemäß dem dritten, erfindungsgemäßen Betriebsverfahren (Graph 18 in Fig. 1) erreicht.

Fig. 5 veranschaulicht eine zweite bevorzugte Ausführungsform einer erfindungsgemäßen Brennkraftmaschine, wobei funktionsgleiche Teile mit gleichen Bezugszeichen versehen sind, wie in den Fig. 2 bis 4, so dass zu deren Erläuterung auf die obige Beschreibung der Fig. 2 bis 4 verwiesen wird. Zusätzlich ist in Fig. 5 ein Einlassventil 50 dargestellt. Bei dieser vorteilhaften Weiterbildung ist am Kühler 36 eine Erweiterung 52 angeordnet, die sich bis in den Einlasskanal 32 erstreckt und auch dort eine Kühlwirkung zur Verfügung stellt. Hierdurch erhöht sich eine Fläche für die Kühlung und eine Kontaktzeit, in der das ausgeschobene bzw. vorgelagerte Restgas mit dem Kühler 36 in wärmeleitendem Kontakt steht.

Fig. 6 veranschaulicht eine dritte bevorzugte Ausführungsform einer erfindungsgemäßen Brennkraftmaschine, wobei funktionsgleiche Teile mit gleichen Bezugszeichen versehen sind, wie in den Fig. 2 bis 5, so dass zu deren Erläuterung auf die obige Beschreibung der Fig. 2 bis 5 verwiesen wird. Die Erweiterung 52 umfasst Kühlzungen 54, die gleichzeitig als Leitbleche zum Erzeugen einer gezielten Ladungsbewegung dienen.

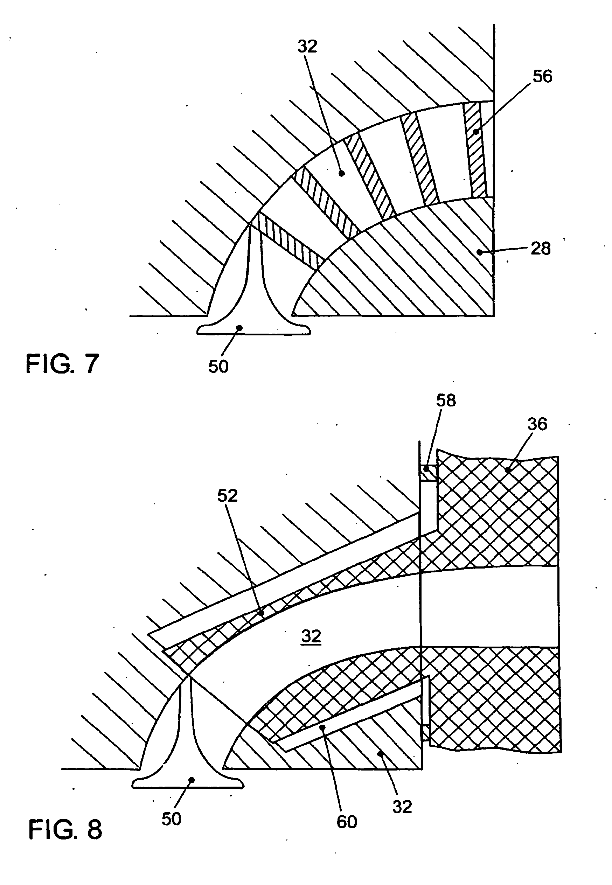

Fig. 7 veranschaulicht eine vierte bevorzugte Ausführungsform einer erfindungsgemäßen Brennkraftmaschine, wobei funktionsgleiche Teile mit gleichen Bezugszeichen versehen sind, wie in den Fig. 2 bis 5, so dass zu deren Erläuterung auf die obige Beschreibung der Fig. 2 bis 5 verwiesen wird. Die Erweiterung 52 umfasst Kühlrippen 56, die optional in den Zylinderkopf 28 integriert sind. Für diese Kühlrippen ist in einer bevorzugten Ausführungsform ein separater Kühlkreislauf getrennt von einem Kühlkreislauf des Zylinderkopfes 28 vorgesehen. Dies führt in vorteilhafter Weise zu einer zusätzlichen Absenkung der Temperatur des Zylinderkopfes 28.

Fig. 8 veranschaulicht eine fünfte bevorzugte Ausführungsform einer erfindungsgemäßen Brennkraftmaschine, wobei funktionsgleiche Teile mit gleichen Bezugszeichen versehen sind, wie In den Fig. 2 bis 5, so dass zu deren Erläuterung auf die obige Beschreibung der Fig. 2 bis 5 verwiesen wird. Zwischen dem Kühler 36 und dem Zylinderkopf 28 ist eine Vorrichtung 58 zur thermischen Entkopplung angeordnet. Weiterhin ist in dem Einlasskanal 32 zwischen der Erweiterung 52 und dem Zylinderkopf 28 eine Isolierung 60 angeordnet.

### Bezugszeichenliste

- 10: horizontale Achse: NOx-Durchsatz in [g/h]
- 12: vertikale Achse: Partikelmassenstrom in [g/h]
- 14: erster Graph: 100% interner Abgasrückführung (AGR), interner Kühlung sowie Vorlagern und Ansaugen über beide Einlasskanäle
- 16: zweiter Graph: 100% interner Abgasrückführung (AGR), interner Kühlung sowie Vorlagern über Tangentialkanal und Ansaugen über beide Einlasskanäle
- 18: dritter Graph: 100% interner Abgasrückführung (AGR), interner Kühlung sowie Vorlagern über Tangentialkanal und Ansaugen über Spiralkanal
- 20: vierter Graph: 100% interner Abgasrückführung (AGR), ohne interner Kühlung, mit Vorlagern und Ansaugen von Restgas über beide Einlasskanäle
- 22: fünfter Graph: 100% externer AGR, ,mit interner Kühlung und Ansaugen über beide Einlasskanäle
- 24: sechster Graph: 100% externer AGR ohne interne Kühlung und Ansaugen über beide Einlasskanäle
- 26: siebter Graph: 100% externer AGR mit interne Kühlung und Ansaugen nur über Spiralkanal
- 28: Zylinderkopf
- 30: Spiralkanal
- 32: Tangentialkanal
- 34: Saugrohr
- 36: Kühler
- 40: Trennwand
- 42: erstes Volumen
- 44: zweites Volumen
- 46: Pfeile Rastgas ausschieben
- 48: Pfeile Restgas ansaugen
- 50: Einlassventil
- 52: Erweiterung
- 54: Kühlzungen
- 56: Kühlrippen
- 58: Vorrichtung zur thermischen Entkopplung
- 60: Isolierung

## Patentansprüche

1. Brennkraftmaschine, insbesondere für ein Kraftfahrzeug, mit einem Zylinderkopf (28), wenigstens einem Arbeitszylinder, wobei für jeden Arbeitszylinder in dem Zylinderkopf (28) wenigstens zwei Einlasskanäle (30, 32) ausgebildet sind, wobei jeweils für jeden Arbeitszylinder ein erster Einlasskanal als Füllungskanal (32) und ein zweiter Einlasskanal als Drallkanal (30) ausgebildet ist, und einem Saugrohr (34) für Verbrennungsluft, welches mit allen Einlasskanälen (30, 32) aller Arbeitszylinder verbunden ist, wobei zwischen dem Saugrohr (34) und dem Zylinderkopf (28) ein Kühler (36) derart angeordnet und ausgebildet ist, dass die aus dem Saugrohr (34) strömende Luft durch den Kühler (36) in wenigstens einen Einlasskanal (30, 32) strömt, **dadurch gekennzeichnet, dass** in dem Kühler (36) eine Trennwand (40) derart angeordnet und ausgebildet ist, dass diese Trennwand (40) den Kühler (36) in ein erstes Volumen (42) und ein zweites Volumen (44) unterteilt, wobei das Saugrohr (34) mit beiden Volumina (42, 44) fluidleitend verbunden ist und das erste Volumen (42) nur mit den Drallkanälen (30) aller Arbeitszylinder und das zweite Volumen (44) nur mit den Füllungskanälen (32) aller Arbeitszylinder fluidleitend verbunden ist.

2. Brennkraftmaschine nach Anspruch 1, **dadurch gekennzeichnet, dass** der Kühler (36) wenigstens einen Kühlmediumkanal zum Durchströmen eines Kühlmediums aufweist.

3. Brennkraftmaschine nach Anspruch 2, **dadurch gekennzeichnet, dass** das Kühlmedium Wasser, Gas oder Öl ist.

4. Brennkraftmaschine nach Anspruch 2 oder 3, **dadurch gekennzeichnet, dass** der Kühlmediumkanal mit einem Kühlsystem des Zylinderkopfes (28) verbunden oder von diesem getrennt ist.

5. Brennkraftmaschine nach wenigstens einem der vorhergehenden Ansprüche, **dadurch gekennzeichnet, dass** der Kühler (36) eine Erweiterung (52) aufweist, die sich bis in wenigstens einen Einlasskanal (32) erstreckt.

6. Brennkraftmaschine nach Anspruch 5, **dadurch gekennzeichnet, dass** die Erweiterung (52) Kühlzungen (54) umfasst, die als Leitbleche zum Erzeugen einer gezielten Ladungsbewegung ausgebildet sind.

7. Brennkraftmaschine nach Anspruch 5 oder 6, **dadurch gekennzeichnet, dass** die Erweiterung (52) Kühlrippen (56) umfasst.

8. Brennkraftmaschine nach Anspruch 7, **dadurch gekennzeichnet, dass** die Kühlrippen (56) einstückig mit dem Zylinderkopf (28) ausgebildet sind.

9. Brennkraftmaschine nach Anspruch 7 oder 8, **dadurch gekennzeichnet, dass** die Kühlrippen (56) mit einem Kühlsystem des Zylinderkopfes (28) verbunden sind.

10. Verfahren zum Betreiben einer Brennkraftmaschine, welche
- einen Zylinderkopf (28),
- wenigstens einen Arbeitszylinder, wobei für jeden Arbeitszylinder in dem Zylinderkopf (28) wenigstens zwei Einlasskanäle (30, 32) ausgebildet sind, wobei jeweils für jeden Arbeitszylinder ein erster Einlasskanal als Füllungskanal (32) und ein zweiter Einlasskanal als Drallkanal (30) ausgebildet ist, und
- ein Saugrohr (34) für Verbrennungsluft, welches mit allen Einlasskanälen (30, 32) aller Arbeitszylinder verbunden ist, wobei zwischen dem Saugrohr (34) und dem Zylinderkopf (28) ein Kühler (36) derart angeordnet und ausgebildet ist, dass die aus dem Saugrohr (34) strömende Luft durch den Kühler (36) in wenigstens einen Einlasskanal (30, 32) strömt,
aufweist und optional zusätzlich gemäß wenigstens einem der Ansprüche 1 bis 9 ausgebildet ist, **dadurch gekennzeichnet, dass** in einem Ausschubtakt eines Arbeitszylinders der Brennkraftmaschine eine für eine interne Abgasrückführung dieses Arbeitszylinders verwendete Restgasmasse nur durch den Füllungskanal (32) aus diesem Arbeitszylinder über den Kühler in das Saugrohr ausgeschoben wird.

11. Verfahren nach Anspruch 10, **dadurch gekennzeichnet, dass** in einem anschließenden Ansaugtakt dieses Arbeitszylinders der Brennkraftmaschine Verbrennungsluft und wenigstens ein Teil der zuvor ausgeschobenen Restgasmenge nur durch den Drallkanal(30) in diesen Arbeitszylinder eingeleitet wird.

12. Verfahren nach Anspruch 11, **dadurch gekennzeichnet, dass** in dem Ansaugtakt Verbrennungsluft und wenigstens ein Teil der zuvor ausgeschobenen Restgasmenge zusätzlich durch den Füllungskanal (32) in diesen Arbeitszylinder eingeleitet wird.

13. Verfahren nach Anspruch 12, **dadurch gekennzeichnet, dass** in dem Ausschubtakt die Restgasmasse zusätzlich durch den Drallkanal (30) aus dem Arbeitszylinder über den Kühler in das Saugrohr ausgeschoben wird.

## Claims

1. Internal combustion engine, in particular for motor vehicle, having a cylinder head (28), at least one working cylinder, wherein at least two inlet ducts (30, 32) for each working cylinder are formed in the cylinder head (28), wherein, for each working cylinder, a first inlet duct is designed as a charging duct (32) and a second inlet duct is designed as a swirl duct (30), and having an intake pipe (34) for combustion air, which intake pipe is connected to all of the inlet duct (30, 32) of all of the working cylinders, wherein, between the intake pipe (34) and the cylinder head (28), a cooler (36) is arranged and designed such that the air flowing out of the intake pipe (34) flows into at least one inlet duct (30, 32) through the cooler (36), **characterized in that**, in the cooler (36), a partition (40) is arranged and designed such that said partition (40) divides the cooler (36) into a first volume (42) and a second volume (44), wherein the intake pipe (34) is connected in fluid-conducting fashion to both volumes (42, 44) and the first volume (42) is connected in fluid-conducting fashion only to the swirl ducts (30) of all of the working cylinders and the second volume (44) is connected in fluid-conducting fashion only to the charging ducts (32) of all of the working cylinders.

2. Internal combustion engine according to Claim 1, **characterized in that** the cooler (36) has at least one cooling medium duct for the throughflow of a cooling medium.

3. Internal combustion engine according to Claim 2, **characterized in that** the cooling medium is water, gas or oil.

4. Internal combustion engine according to Claim 2 or 3, **characterized in that** the cooling medium duct is connected to or separated from a cooling system of the cylinder head (28).

5. Internal combustion engine according to at least one of the preceding claims, **characterized in that** the cooler (36) has an extension (52) which extends into at least one inlet duct (32).

6. Internal combustion engine according to Claim 5, **characterized in that** the extension (52) comprises cooling tongues (54) which are in the form of guide lamellae for generating a targeted charge movement.

7. Internal combustion engine according to Claim 5 or 6, **characterized in that** the extension (52) comprises cooling ribs (56).

8. Internal combustion engine according to Claim 7, **characterized in that** the cooling ribs (56) are formed integrally with the cylinder head (28).

9. Internal combustion engine according to Claim 7 or 8, **characterized in that** the cooling ribs (56) are connected to a cooling system of the cylinder head (28).

10. Method for operating an internal combustion engine which has
- a cylinder head (28),
- at least one working cylinder, wherein at least two inlet ducts (30, 32) for each working cylinder are formed in the cylinder head (28), wherein, for each working cylinder, a first inlet duct is designed as a charging duct (32) and a second inlet duct is designed as a swirl duct (30), and
- an intake pipe (34) for combustion air, which intake pipe is connected to all of the inlet duct (30, 32) of all of the working cylinders, wherein, between the intake pipe (34) and the cylinder head (28), a cooler (36) is arranged and designed such that the air flowing out of the intake pipe (34) flows into at least one inlet duct (30, 32) through the cooler (36),
and which is optionally additionally designed according to at least one of Claims 1 to 9, **characterized in that**, in an exhaust stroke of a working cylinder of the internal combustion engine, a residual gas mass used for internal exhaust-gas recirculation for said working cylinder is discharged from said working cylinder via the cooler into the intake pipe only through the charging duct (32).

11. Method according to Claim 10, **characterized in that**, in a subsequent intake stroke of said working cylinder of the internal combustion engine, combustion air and at least a part of the previously discharged residual gas quantity is introduced into said working cylinder only through the swirl duct (30).

12. Method according to Claim 11, **characterized in that**, in the intake stroke, combustion air and at least a part of the previously discharged residual gas quantity is introduced into said working cylinder additionally through the charging duct (32).

13. Method according to Claim 12, **characterized in that**, in the exhaust stroke, the residual gas mass is discharged from the working cylinder via the cooler into the intake pipe additionally through the swirl duct (30).

## Revendications

1. Moteur à combustion interne, en particulier pour un véhicule automobile, comprenant une culasse (28), au moins un cylindre de travail, pour chaque cylindre de travail dans la culasse (28) étant réalisés au moins deux conduits d'admission (30, 32), pour chaque cylindre de travail, respectivement, un premier conduit d'admission étant réalisé en tant que conduit de remplissage (32) et un deuxième conduit d'admission étant réalisé en tant que conduit de turbulence (30), et comprenant un tuyau collecteur d'admission (34) pour l'air de combustion, lequel tuyau collecteur d'admission est connecté à tous les conduits d'admission (30, 32) de tous les cylindres de travail, entre le tuyau collecteur d'admission (34) et la culasse (28) étant disposé et réalisé un radiateur (36), de telle sorte que l'air sortant du tuyau collecteur d'admission (34) s'écoule à travers le radiateur (36) dans au moins un conduit d'admission (30, 32), **caractérisé en ce que** dans le radiateur (36) est disposée et réalisée une paroi de séparation (40), de telle sorte que cette paroi de séparation (40) divise le radiateur (36) en un premier volume (42) et un deuxième volume (44), le tuyau collecteur d'admission (34) étant connecté de manière fluidique aux deux volumes (42, 44) et le premier volume (42) étant seulement connecté de manière fluidique aux conduits de turbulence (30) de tous les cylindres de travail et le deuxième volume (44) étant seulement connecté de manière fluidique aux conduits de remplissage (32) de tous les cylindres de travail.

2. Moteur à combustion interne selon la revendication 1, **caractérisé en ce que** le radiateur (36) présente au moins un conduit de réfrigérant pour le passage d'un réfrigérant.

3. Moteur à combustion interne selon la revendication 2, **caractérisé en ce que** le réfrigérant est de l'eau, du gaz ou de l'huile.

4. Moteur à combustion interne selon la revendication 2 ou 3, **caractérisé en ce que** le conduit de réfrigérant est connecté à un système de refroidissement de la culasse (28) ou est séparé de celui-ci.

5. Moteur à combustion interne selon au moins l'une quelconque des revendications précédentes, **caractérisé en ce que** le radiateur (36) présente un élargissement (52) qui s'étend jusque dans au moins un conduit d'admission (32).

6. Moteur à combustion interne selon la revendication 5, **caractérisé en ce que** l'élargissement (52) comprend des langues de refroidissement (54) qui sont réalisées sous forme de tôles directrices pour générer un mouvement de charge spécifique.

7. Moteur à combustion interne selon la revendication 5 ou 6, **caractérisé en ce que** l'élargissement (52) comprend des ailettes de refroidissement (56).

8. Moteur à combustion interne selon la revendication 7, **caractérisé en ce que** les ailettes de refroidissement (56) sont réalisées d'une seule pièce avec la culasse (28).

9. Moteur à combustion interne selon la revendication 7 ou 8, **caractérisé en ce que** les ailettes de refroidissement (56) sont connectées à un système de refroidissement de la culasse (28).

10. Procédé pour faire fonctionner un moteur à combustion interne, lequel présente
- une culasse (28),
- au moins un cylindre de travail, pour chaque cylindre de travail dans la culasse (28) étant réalisés au moins deux conduits d'admission (30, 32), pour chaque cylindre de travail, respectivement, un premier conduit d'admission étant réalisé en tant que conduit de remplissage (32) et un deuxième conduit d'admission étant réalisé en tant que conduit de turbulence (30), et
- un tuyau collecteur d'admission (34) pour l'air de combustion, lequel tuyau collecteur d'admission est connecté à tous les conduits d'admission (30, 32) de tous les cylindres de travail, entre le tuyau collecteur d'admission (34) et la culasse (28) étant disposé et réalisé un radiateur (36), de telle sorte que l'air sortant du tuyau collecteur d'admission (34) s'écoule à travers le radiateur (36) dans au moins un conduit d'admission (30, 32),
et est réalisé éventuellement en outre selon au moins l'une quelconque des revendications 1 à 9, **caractérisé en ce que** dans un temps d'expulsion d'un cylindre de travail du moteur à combustion interne, une masse de gaz résiduelle utilisée pour une recirculation interne de gaz d'échappement de ce cylindre de travail est expulsée seulement à travers le conduit de remplissage (32) hors de ce cylindre de travail par le biais du radiateur dans le tuyau collecteur d'admission.

11. Procédé selon la revendication 10, **caractérisé en ce que** dans une temps d'admission subséquent de ce cylindre de travail du moteur à combustion interne, de l'air de combustion et au moins une partie de la quantité de gaz résiduelle préalablement expulsée sont introduits seulement à travers le conduit de turbulence (30) dans ce cylindre de travail.

12. Procédé selon la revendication 11, **caractérisé en ce que** dans le temps d'admission, de l'air de combustion et au moins une partie de la quantité de gaz résiduelle préalablement expulsée sont en outre introduits à travers le conduit de remplissage (32) dans ce cylindre de travail.

13. Procédé selon la revendication 12, **caractérisé en ce que** dans le temps d' expulsion, la masse de gaz résiduelle est en outre expulsée à travers le conduit de turbulence (30) hors du cylindre de travail par le biais du radiateur dans le tuyau collecteur d'admission.
